# EUROPEAN PATENT APPLICATION

(11) **EP 4 808 023 A1**
(43) Date of publication of application: **16.09.2026**
(21) Application number: 24896508.9
(22) Date of filing: 26.11.2024
(51) Int. Cl.: H04L 1/00

(54) **DATA TRANSMISSION METHOD AND APPARATUS**

(30) Priority: 30.11.2023 CN 202311631375
(71) Applicant: Huawei Technologies Co., Ltd., Shenzhen, Guangdong 518129 (CN)
(72) Inventor: ZHANG, Sen, Shenzhen, Guangdong 518129 (CN); WANG, Renlei, Shenzhen, Guangdong 518129 (CN); ZHANG, Tingting, Shenzhen, Guangdong 518129 (CN); PAN, Dongcheng, Shenzhen, Guangdong 518129 (CN)
(74) Representative: Isarpatent
(86) International application number: PCT/CN2024/134436
(87) International publication number: WO 2025/113419

(57) **Abstract**

This application provides a data transmission method and an apparatus. The method includes: A first communication device transmits a first data frame to a second communication device, where the first data frame includes a first quantity of valid data blocks. When a first rate is different from a second rate, the first communication device adjusts, based on the first rate and the second rate, the quantity of valid data blocks in the transmitted data frame from the first quantity to a second quantity, to obtain a second data frame after adjustment, where a length of the first data frame is the same as a length of the second data frame, the first rate is a rate at which the first communication device transmits valid data in the data frame, and the second rate is a rate at which data is transmitted over a media access control MAC layer of the first communication device. The first communication device transmits the second data frame to the second communication device. In the solutions in embodiments of this application, the rate at which the communication device transmits the valid data can adapt to the transmission rate of the MAC layer.

## Description

This application claims priority to Chinese Patent Application No. 202311631375.3, filed with the China National Intellectual Property Administration on November 30, 2023 and entitled "DATA TRANSMISSION METHOD AND APPARATUS", which is incorporated herein by reference in its entirety.

### TECHNICAL FIELD

This application relates to the field of network communication, and more specifically, to a data transmission method and an apparatus.

### BACKGROUND

A conventional Ethernet usually uses an Ethernet cable like an electrical cable or an optical cable as a transmission medium. For example, 10BASE-T and 100BASE-TX defined in the IEEE 802.3 standard are Ethernets over which duplex or full-duplex transmission is performed at 10 Mb/s or 100 Mb/s through two twisted pairs, and 1000BASE-T, 2.5GBASE-T, 5GBASE-T, and 10GBASE-T are Ethernets over which full-duplex transmission is performed at 1 Gb/s, 2.5 Gb/s, 5 Gb/s, and 10 Gb/s through four twisted pairs. In actual application of the Ethernet, due to reasons such as dragging during construction, loose crimping of a cable connector, and aging of a connector crimping piece, a fault easily occurs in an electrical cable or an optical cable, and at least one Ethernet cable in the Ethernet may easily fail to perform network communication.

Currently, because 1000BASE-T, 2.5GBASE-T, 5GBASE-T, and 10GBASE-T defined in the foregoing standard all need four twisted pairs to implement network communication, if the foregoing wire pair fault appears, auto-negotiation for a mode that supports 10BASE-T and 100BASE-TX is performed according to the standard, and a transmission rate sharply drops to 10 Mb/s or 100 Mb/s. In this case, a link bandwidth and user experience are directly affected.

Therefore, how to maintain a high Ethernet rate when a part of Ethernet cables are faulty becomes a problem that needs to be urgently resolved currently.

### SUMMARY

This application provides a data transmission method and an apparatus. By adjusting a quantity of valid data blocks in a data frame transmitted by a communication device, when a part of wire pairs in Ethernet cables are faulty, the communication device can still maintain a high Ethernet rate during data transmission.

According to a first aspect, a data transmission method is provided, including: A first communication device transmits a first data frame to a second communication device, where the first data frame includes a first quantity of valid data blocks. When a first rate is different from a second rate, the first communication device adjusts, based on the first rate and the second rate, the quantity of valid data blocks in the transmitted data frame from the first quantity to a second quantity, to obtain a second data frame after adjustment, where a length of the first data frame is the same as a length of the second data frame, the first rate is a rate at which the first communication device transmits valid data in the data frame, and the second rate is a rate at which data is transmitted over a media access control MAC layer of the first communication device. The first communication device transmits the second data frame to the second communication device.

The method shown in the first aspect may be applied to an Ethernet data transmission scenario. In the Ethernet scenario, network communication and data transmission at a specific rate are implemented between at least two communication devices through at least one Ethernet cable. The communication device may be a terminal device like a personal computer, a printer, or a camera, or a network device like a switch, and the Ethernet cable may be a twisted pair or an optical fiber. For example, when an Ethernet communication standard is 2.5GBASE-T, the first communication device and the second communication device are interconnected through four twisted pairs, and full-duplex transmission of valid data is implemented at 2.5 Gb/s.

In the technical solutions in this application, when the first rate is different from the second rate, the first communication device adjusts the quantity of valid data blocks in the transmitted data frame. A case in which the first rate is different from the second rate may occur when a part of wire pairs in Ethernet cables are faulty, or may occur when only a part of Ethernet cables in a link are selected for transmission. For example, when the Ethernet communication standard is 2.5GBASE-T or 5GBASE-T, a rate at which transmission of the valid data in the first data frame is performed through four twisted pairs between the communication devices is 2.5 Gb/s or 5 Gb/s. If two of the four twisted pairs are faulty, the other two twisted pairs in a normal operating state can still implement a transmission rate of 1.25 Gb/s or 2.5 Gb/s, that is, the first rate may be 1.25 Gb/s or 2.5 Gb/s. However, because the second rate at which the data is transmitted over the MAC layer of the communication device is not particularly flexible, and not all types of rates of the MAC layer can be supported, for example, an optional second rate of the MAC layer may be only 1 Gb/s, 2.5 Gb/s, 5 Gb/s, or the like, when the first rate is 1.25 Gb/s, only the closest second rate that is 1 Gb/s can be selected. In this case, the first rate is different from the second rate. When the first rate is 2.5 Gb/s, the second rate that is 2.5 Gb/s may be selected. In this case, the first rate is the same as the second rate.

It should be noted that the first rate is the rate at which the first communication device transmits the valid data in the data frame, and is not a rate at which the first communication device transmits the data frame. For example, when the Ethernet communication standard is 2.5GBASE-T and no wire pair is faulty, the rate at which the communication device transmits the valid data in the first data frame is 2.5 Gb/s. In addition, in the Ethernet communication standard, the length of the first data frame is 2048 bits, and a length of the valid data is 1600 bits. Therefore, a corresponding transmission rate for transmitting the first data frame is 3.2 Gb/s. In the technical solutions in this application, a rate at which transmission of the valid data in the data frame is performed between the communication devices is mainly described.

It should be understood that, in the application scenario of the Ethernet, before the first communication device sends the first data frame or the second data frame, valid data sent over the media access control MAC layer is encoded at a physical layer of the first communication device, to obtain the first data frame or the second data frame. Data from an interface may be encoded into blocks in an encoding process at a physical coding sublayer PCS in the physical layer, to obtain valid data blocks. For example, in a communication standard of 2.5GBASE-T, 5GBASE-T, or 10GBASE-T, a bit is added as a control word Data/Ctrl header to 64-bit data from the interface in the encoding process at the PCS, and the valid data blocks are 64B/65B code blocks. In embodiments of this application, the valid data block may be the foregoing 64B/65B data block, or may be a 128B/129B data block, a 256B/257B data block, or the like that may appear in the future. In embodiments of this application, a method of forward error correction FEC coding at the PCS may be coding based on Reed-Solomon code (reed-solomon code, RS code), convolutional code, low-density parity-check (low-density parity-check code, LDPC) code, polar code, or the like.

In some other embodiments of this application, different Ethernet standards may correspond to different first quantities. For example, in the communication standard of 2.5GBASE-T or 5GBASE-T, the first quantity is 25, and in the communication standard of 10GBASE-T, the first quantity is 50.

In actual application of an Ethernet, due to reasons such as dragging during construction, loose crimping of a cable connector, and aging of a connector crimping piece, a fault easily occurs in an Ethernet cable like an electrical cable or an optical cable, and at least one Ethernet cable in the Ethernet may easily fail to perform communication. In the solutions in embodiments of this application, when the first rate is different from the second rate, the first communication device may adjust the quantity of valid data blocks in the data frame, in other words, adjust the length of the valid data in the data frame, so that a data transmission process can adapt to the second rate, in other words, the data transmission rate of the MAC layer. In other words, in the technical solutions in this application, the rate at which the first communication device transmits the valid data is reduced from the first rate to the second rate, to adapt to the rate at which the data is transmitted over the MAC layer. In addition, an overall encoding process at the physical coding sublayer of the first communication device is not changed, in other words, the lengths of the first data frame and the second data frame are not changed. Therefore, a modulation format and a baud rate of a normal wire pair that are originally used when the first rate is the same as the second rate may be maintained.

Then, in this application, in the foregoing fault scenario, the rate at which the communication device transmits the valid data can adapt to the transmission rate of the MAC layer, and a rate at which the data frame is transmitted through an Ethernet cable connected to the communication device remains unchanged by keeping the modulation format and the baud rate of the normal wire pair unchanged. In addition, a PMA layer of the communication device is slightly changed, hardware implementation complexity is low, and a delay is short.

With reference to the first aspect, in some implementations of the first aspect, that the first communication device adjusts, based on the first rate and the second rate, the quantity of valid data blocks in the transmitted data frame from the first quantity to the second quantity includes: The first communication device adjusts, based on a ratio between the first rate and the second rate, a total of bits in the valid data in the transmitted data frame from a third quantity to a fourth quantity, where a ratio between the third quantity and the fourth quantity is the same as the ratio between the first rate and the second rate, the third quantity is a total of bits in the first quantity of valid data blocks, and the fourth quantity is a total of bits in the second quantity of valid data blocks.

It should be understood that, it can be learned from the foregoing that, in the technical solutions in this application, the rate at which the first communication device transmits the valid data is reduced from the first rate to the second rate, to adapt to the rate at which the data is transmitted over the MAC layer. To reduce the rate at which the first communication device transmits the valid data, the length of the valid data in the data frame transmitted by the first communication device needs to be reduced. In addition, because the rate at which the data frame is transmitted through the normal wire pair remains unchanged, and a ratio between the transmission rate of the valid data and the transmission rate of the data frame is a ratio between the length of the valid data in the data frame and the length of the data frame, the total of the bits in the valid data in the transmitted data frame is adjusted from the third quantity to the fourth quantity, and the ratio between the third quantity and the fourth quantity is the same as the ratio between the first rate and the second rate, so that the length of the valid data transmitted by the first communication device is reduced, the rate of the valid data can be reduced from the first rate to the second rate.

With reference to the first aspect, in some implementations of the first aspect, that the first communication device adjusts, based on the ratio between the first rate and the second rate, the quantity of bits in the valid data in the transmitted data frame from the third quantity to the fourth quantity includes: The first communication device adjusts, based on the ratio between the first rate and the second rate, the quantity of valid data blocks in the transmitted data frame from the first quantity to the second quantity, where a ratio between the first quantity and the second quantity is the same as the ratio between the third quantity and the fourth quantity.

It should be understood that the length of the valid data is a product of the quantity of valid data blocks and a length of each valid data block. Therefore, a ratio between the quantity of valid data blocks before adjustment and the quantity of valid data blocks after adjustment is the same as a ratio between the length of the valid data before adjustment and a length of valid data after adjustment. Further, the length of the valid data in the data frame may be adjusted by adjusting the quantity of valid data blocks in the data frame.

With reference to the first aspect, in some implementations of the first aspect, that the first communication device adjusts, based on the first rate and the second rate, the quantity of valid data blocks in the transmitted data frame from the first quantity to the second quantity includes: The first communication device adjusts, based on the first rate and the second rate, a preset quantity of padding bits when the data frames are encoded at a physical coding sublayer PCS, where the first data frame on which the first communication device performs PCS encoding includes the first quantity of valid data blocks and a first preset quantity of padding bits, the second data frame on which the first communication device performs PCS encoding includes the second quantity of valid data blocks and a second preset quantity of padding bits, and a total of the bits in the first quantity of valid data blocks and the first preset quantity of bits is the same as a total of the bits in the second quantity of valid data blocks and the second preset quantity of bits.

It should be understood that the encoding process at the PCS of the communication device includes encoding and scrambling the valid data blocks, encoding the data frames, FEC encoding, and the like. When the first rate is the same as the second rate, in a process of encoding a data frame, at the PCS, the first quantity of valid data blocks are collected, and the first preset quantity of bits are padded, to obtain the first data frame. For example, the first preset quantity of bits may include 0s or random numbers, and check bits of FEC encoding. In embodiments of this application, when the first rate is different from the second rate, at the PCS, the second quantity of valid data blocks are collected, and then the quantity of padding bits is adjusted from the first preset quantity to the second preset quantity, to finally obtain the second data frame whose length is the same as that of the first data frame.

With reference to the first aspect, in some implementations of the first aspect, a rate at which the first communication device transmits the valid data in the first data frame is a third rate, and the method further includes: The first communication device adjusts, based on the third rate and the second rate, clock frequencies used for PCS encoding and scrambling on the valid data blocks by the first communication device.

With reference to the first aspect, in some implementations of the first aspect, when the first communication device transmits the first data frame, the clock frequencies used for PCS encoding and scrambling on the valid data blocks by the first communication device are n₁ and m₁ respectively. That the first communication device adjusts, based on the third rate and the second rate, the clock frequencies used for PCS encoding and scrambling on the valid data blocks by the first communication device includes: The first communication device adjusts, based on a ratio between the third rate and the second rate, the clock frequencies used for PCS encoding and scrambling on the valid data blocks by the first communication device to n₂ and m₂ respectively, where a ratio between n₁ and n₂ is the same as the ratio between the third rate and the second rate, and a ratio between m₁ and m₂ is the same as the ratio between the third rate and the second rate.

With reference to the first aspect, in some implementations of the first aspect, the rate at which the first communication device transmits the valid data in the first data frame is a third rate, and the method further includes: The first communication device adjusts, based on the third rate and the first rate, a clock frequency used for PCS encoding on the data frame by the first communication device.

With reference to the first aspect, in some implementations of the first aspect, when the first communication device transmits the first data frame, the clock frequency used for encoding the first data frame is h₁. That the first communication device adjusts, based on the third rate and the first rate, the clock frequency used for PCS encoding on the data frame by the first communication device includes: The first communication device adjusts, based on a ratio between the third rate and the first rate, the clock frequency used for PCS encoding on the data frame by the first communication device to h₂, where a ratio between h₁ and h₂ is the same as the ratio between the third rate and the first rate.

It should be understood that, when a wire pair in the Ethernet cables is faulty, both the data transmission rate of the MAC layer and a rate at which the valid data is transmitted over at least one Ethernet cable in a new link are changed. Therefore, for adaptation to the foregoing adjusted rate, a clock frequency of each module at the physical layer of the first communication device needs to be adjusted. A module that encodes and scrambles the valid data blocks receives the valid data from the MAC layer. Therefore, a clock frequency needs to be adjusted based on the ratio between the second rate of the MAC layer and the third rate. A module that encodes the data frames is configured to send the data frames to an Ethernet cable. Therefore, a clock frequency needs to be adjusted based on the ratio between the first rate and the third rate.

With reference to the first aspect, in some implementations of the first aspect, the valid data block is the 64B/65B code block.

Optionally, the valid data block may be a 64B/66B code block, a 32B/33B code block, or the like, or the 128B/129B code block, the 256B/257B code block, or the like that may appear in the future.

With reference to the first aspect, in some implementations of the first aspect, a manner of FEC coding at the PCS of the first communication device is low-density parity-check LDPC coding.

Optionally, a manner of forward error correction FEC coding at the PCS may be coding based on the Reed-Solomon code (reed-solomon code, RS code), the convolutional code, the polar code, or the like.

With reference to the first aspect, in some implementations of the first aspect, the first communication device is a network device or a terminal device.

For example, the terminal device may be a personal computer, a printer, or a camera, and the network device may be a switch.

With reference to the first aspect, in some implementations of the first aspect, the first communication device and the second communication device perform network communication and data transmission through at least one twisted pair or at least one pair of optical fibers.

For example, one optical fiber in one pair of optical fibers is used to send a data signal, and the other is used to receive a data signal; and two wires in one twisted pair are respectively used for transmission of differential signals with equal amplitudes and opposite phases.

According to a second aspect, a data transmission method is provided, including: When a fourth rate is different from a fifth rate, a second communication device adjusts a quantity of valid data blocks obtained by decoding a data frame from a first quantity to a second quantity, where the fourth rate is a rate at which the second communication device receives valid data in the data frame, the fifth rate is a rate at which data is received over a media access control MAC layer of the second communication device, and the first quantity is, when the fourth rate is the same as the fifth rate, a quantity of valid data blocks obtained by the second communication device by decoding a first data frame. The second communication device receives a second data frame from a first communication device, where the second data frame includes the second quantity of valid data blocks. The second communication device decodes the second data frame to obtain the second quantity of valid data blocks.

It should be understood that the first communication device is connected to the second communication device through an Ethernet cable. Therefore, a value of a first rate is the same as a value of the fourth rate, and a value of a second rate is the same as a value of the fifth rate. In other words, when the first rate is different from the second rate, the fourth rate is also different from the fifth rate. Further, after the first communication device adjusts the quantity of valid data blocks in the transmitted data frame, the second communication device also needs to adjust the quantity of valid data blocks obtained by decoding the data frame, that is, to the second quantity. Finally, the second communication device can obtain the second quantity of valid data blocks in the second data frame by decoding the second data frame sent by the first communication device.

Correspondingly, a decoding process of the second communication device is opposite to an encoding process of the first communication device, and includes FEC decoding, separating the valid data blocks, descrambling and decoding the valid data blocks, and the like. The second communication device adjusts a quantity of the valid data blocks obtained by separating the valid data blocks.

An implementation of the second aspect is a decoding process corresponding to the encoding implementation of the first aspect. For a specific implementation and beneficial effects of the second aspect, refer to the descriptions in the first aspect. Details are not described herein again.

With reference to the second aspect, in some implementations of the second aspect, that the second communication device adjusts, based on the fourth rate and the fifth rate, the quantity of valid data blocks obtained by decoding the data frame from the first quantity to the second quantity includes: The second communication device adjusts, based on a ratio between the fourth rate and the fifth rate, a total of bits in the valid data obtained by decoding the data frame from a third quantity to a fourth quantity, where a ratio between the third quantity and the fourth quantity is the same as the ratio between the fourth rate and the fifth rate, the third quantity is a total of bits in the first quantity of valid data blocks, and the fourth quantity is a total of bits in the second quantity of valid data blocks.

With reference to the second aspect, in some implementations of the second aspect, that the second communication device adjusts, based on the ratio between the fourth rate and the fifth rate, from the third quantity to the fourth quantity, the total of the bits in the valid data obtained by decoding the data frame includes: The second communication device adjusts, based on the ratio between the fourth rate and the fifth rate, the quantity of valid data blocks obtained by decoding the data frame from the first quantity to the second quantity, where a ratio between the first quantity and the second quantity is the same as the ratio between the third quantity and the fourth quantity.

With reference to the second aspect, in some implementations of the second aspect, that the second communication device adjusts, based on the fourth rate and the fifth rate, the quantity of valid data blocks obtained by decoding the data frame from the first quantity to the second quantity includes: The second communication device adjusts, based on the fourth rate and the fifth rate, a preset quantity of discarded bits when the data frames are decoded at a PCS, where the first data frame on which the second communication device performs PCS decoding includes the first quantity of valid data blocks and a first preset quantity of to-be-discarded bits, the second data frame on which the second communication device performs PCS decoding includes the second quantity of valid data blocks and a second preset quantity of to-be-discarded bits, and a total of the bits in the first quantity of valid data blocks and the first preset quantity of bits is the same as a total of the bits in the second quantity of valid data blocks and the second preset quantity of bits.

With reference to the second aspect, in some implementations of the second aspect, a rate at which the second communication device receives the valid data in the first data frame is a sixth rate, and the method further includes: The second communication device adjusts, based on the sixth rate and the fourth rate, a clock frequency used for PCS decoding on the data frame by the second communication device.

With reference to the second aspect, in some implementations of the second aspect, when the second communication device receives the first data frame, the clock frequency used for PCS decoding on the first data frame by the second communication device is h₃. That the second communication device adjusts, based on the sixth rate and the fourth rate, the clock frequency used for PCS decoding on the data frame by the second communication device includes: The second communication device adjusts, based on a ratio between the sixth rate and the fourth rate, to h₄, the clock frequency used for PCS decoding on the data frame by the second communication device, where a ratio between h₃ and h₄ is the same as the ratio between the sixth rate and the fourth rate.

With reference to the second aspect, in some implementations of the second aspect, the rate at which the second communication device receives the valid data in the first data frame is the sixth rate, and the method further includes: The second communication device adjusts, based on the sixth rate and the fifth rate, clock frequencies used for PCS descrambling and decoding on the valid data blocks by the second communication device.

With reference to the second aspect, in some implementations of the second aspect, when the second communication device receives the first data frame, the clock frequencies used for descrambling and decoding the valid data blocks in the first data frame are n₃ and m₃ respectively. That the second communication device adjusts, based on the sixth rate and the fifth rate, the clock frequencies used for PCS descrambling and decoding on the valid data blocks by the second communication device includes: The second communication device adjusts, based on a ratio between the sixth rate and the fifth rate, the clock frequencies used for PCS descrambling and decoding on the valid data blocks by the second communication device to n₄ and m₄, where a ratio between n₃ and n₄ is the same as the ratio between the sixth rate and the fifth rate, and a ratio between m₃ and m₄ is the same as the ratio between the sixth rate and the fifth rate.

With reference to the second aspect, in some implementations of the second aspect, the valid data block is a 64B/65B code block.

Optionally, the valid data block may be a 64B/66B code block, a 32B/33B code block, or the like, or a 128B/129B code block, a 256B/257B code block, or the like that may appear in the future.

With reference to the second aspect, in some implementations of the second aspect, a manner of FEC coding at the PCS is low-density parity-check LDPC coding.

Optionally, a manner of forward error correction FEC coding at the PCS may be coding based on Reed-Solomon code (reed-solomon code, RS code), convolutional code, polar code, or the like.

With reference to the second aspect, in some implementations of the second aspect, the second communication device is a network device or a terminal device.

For example, the terminal device may be a personal computer, a printer, or a camera, and the network device may be a switch.

With reference to the second aspect, in some implementations of the second aspect, the second communication device and the first communication device perform network communication and data transmission through at least one twisted pair or at least one pair of optical fibers.

For example, one optical fiber in one pair of optical fibers is used to send a data signal, and the other is used to receive a data signal; and two wires in one twisted pair are respectively used for transmission of differential signals with equal amplitudes and opposite phases.

According to a third aspect, a data transmission apparatus is provided, where the apparatus is used in a first communication device, and includes: a transmission module, configured to transmit a first data frame to a second communication device, where the first data frame includes a first quantity of valid data blocks; and an adjustment module, configured to: when a first rate is different from a second rate, adjust, based on the first rate and the second rate, the quantity of valid data blocks in the transmitted data frame from the first quantity to a second quantity, to obtain a second data frame after adjustment, where a length of the first data frame is the same as a length of the second data frame, the first rate is a rate at which the first communication device transmits valid data in the data frame, and the second rate is a rate at which data is transmitted over a media access control MAC layer of the first communication device. The transmission module is specifically configured to transmit the second data frame to the second communication device.

With reference to the third aspect, in some implementations of the third aspect, the adjustment module is specifically configured to adjust, based on a ratio between the first rate and the second rate, a total of bits in the valid data in the transmitted data frame from a third quantity to a fourth quantity, where a ratio between the third quantity and the fourth quantity is the same as the ratio between the first rate and the second rate, the third quantity is a total of bits in the first quantity of valid data blocks, and the fourth quantity is a total of bits in the second quantity of valid data blocks.

With reference to the third aspect, in some implementations of the third aspect, the adjustment module is specifically configured to adjust, by the first communication device based on the ratio between the first rate and the second rate, the quantity of valid data blocks in the transmitted data frame from the first quantity to the second quantity, where a ratio between the first quantity and the second quantity is the same as the ratio between the third quantity and the fourth quantity.

With reference to the third aspect, in some implementations of the third aspect, the adjustment module is specifically configured to adjust, by the first communication device based on the first rate and the second rate, a preset quantity of padding bits when the data frames are encoded at a physical coding sublayer PCS, where the first data frame on which the first communication device performs PCS encoding includes the first quantity of valid data blocks and a first preset quantity of padding bits, the second data frame on which the first communication device performs PCS encoding includes the second quantity of valid data blocks and a second preset quantity of padding bits, and a total of the bits in the first quantity of valid data blocks and the first preset quantity of bits is the same as a total of the bits in the second quantity of valid data blocks and the second preset quantity of bits.

With reference to the third aspect, in some implementations of the third aspect, a rate at which the first communication device transmits the valid data in the first data frame is a third rate, and the adjustment module is further configured to adjust, based on the third rate and the second rate, clock frequencies used for PCS encoding and scrambling on the valid data blocks by the first communication device.

With reference to the third aspect, in some implementations of the third aspect, when the first communication device transmits the first data frame, the clock frequencies used for PCS encoding and scrambling on the valid data blocks by the first communication device are n₁ and m₁ respectively. The adjustment module is specifically configured to adjust, based on a ratio between the third rate and the second rate, the clock frequencies used for PCS encoding and scrambling on the valid data blocks by the first communication device to n₂ and m₂ respectively, where a ratio between n₁ and n₂ is the same as the ratio between the third rate and the second rate, and a ratio between m₁ and m₂ is the same as the ratio between the third rate and the second rate.

With reference to the third aspect, in some implementations of the third aspect, the rate at which the first communication device transmits the valid data in the first data frame is a third rate, and the adjustment module is further configured to adjust, based on the third rate and the first rate, a clock frequency used for PCS encoding on the data frame by the first communication device.

With reference to the third aspect, in some implementations of the third aspect, when the first communication device transmits the first data frame, the clock frequency used for encoding the first data frame is h₁. That the first communication device adjusts, based on the third rate and the first rate, the clock frequency used for PCS encoding on the data frame by the first communication device includes: The first communication device adjusts, based on a ratio between the third rate and the first rate, the clock frequency used for PCS encoding on the data frame by the first communication device to h₂, where a ratio between h₁ and h₂ is the same as the ratio between the third rate and the first rate.

According to a fourth aspect, a data transmission apparatus is provided, where the apparatus is used in a second communication device, and includes: an adjustment module, configured to: when a fourth rate is different from a fifth rate, adjust a quantity of valid data blocks obtained by decoding a data frame from a first quantity to a second quantity, where the fourth rate is a rate at which the second communication device receives valid data in the data frame, the fifth rate is a rate at which data is received over a media access control MAC layer of the second communication device, and the first quantity is, when the fourth rate is the same as the fifth rate, a quantity of valid data blocks obtained by the second communication device by decoding a first data frame; a receiving module, configured to receive a second data frame from a first communication device, where the second data frame includes the second quantity of valid data blocks; and a decoding module, configured to decode the second data frame to obtain the second quantity of valid data blocks.

With reference to the fourth aspect, in some implementations of the fourth aspect, the adjustment module is specifically configured to adjust, based on a ratio between the fourth rate and the fifth rate, a total of bits in the valid data obtained by decoding the data frame from a third quantity to a fourth quantity, where a ratio between the third quantity and the fourth quantity is the same as the ratio between the fourth rate and the fifth rate, the third quantity is a total of bits in the first quantity of valid data blocks, and the fourth quantity is a total of bits in the second quantity of valid data blocks.

With reference to the fourth aspect, in some implementations of the fourth aspect, the adjustment module is specifically configured to adjust, based on the ratio between the fourth rate and the fifth rate, the quantity of valid data blocks obtained by decoding the data frame from the first quantity to the second quantity, where a ratio between the first quantity and the second quantity is the same as the ratio between the third quantity and the fourth quantity.

With reference to the fourth aspect, in some implementations of the fourth aspect, the adjustment module is specifically configured to adjust, based on the fourth rate and the fifth rate, a preset quantity of discarded bits when the data frames are decoded at a PCS, where the first data frame on which the second communication device performs PCS decoding includes the first quantity of valid data blocks and a first preset quantity of to-be-discarded bits, the second data frame on which the second communication device performs PCS decoding includes the second quantity of valid data blocks and a second preset quantity of to-be-discarded bits, and a total of the bits in the first quantity of valid data blocks and the first preset quantity of bits is the same as a total of the bits in the second quantity of valid data blocks and the second preset quantity of bits.

With reference to the fourth aspect, in some implementations of the fourth aspect, a rate at which the second communication device receives the valid data in the first data frame is a sixth rate, and the adjustment module is further configured to adjust, based on the sixth rate and the fourth rate, a clock frequency used for PCS decoding on the data frame by the second communication device.

With reference to the fourth aspect, in some implementations of the fourth aspect, when the second communication device receives the first data frame, the clock frequency used for PCS decoding on the first data frame by the second communication device is h₃. The adjustment module is specifically configured to adjust, based on a ratio between the sixth rate and the fourth rate, to h₄, the clock frequency used for PCS decoding on the data frame by the second communication device, where a ratio between h₃ and h₄ is the same as the ratio between the sixth rate and the fourth rate.

With reference to the fourth aspect, in some implementations of the fourth aspect, the rate at which the second communication device receives the valid data in the first data frame is the sixth rate, and the adjustment module is further configured to adjust, based on the sixth rate and the fifth rate, clock frequencies used for PCS descrambling and decoding on the valid data blocks by the second communication device.

With reference to the fourth aspect, in some implementations of the fourth aspect, when the second communication device receives the first data frame, the clock frequencies used for descrambling and decoding the valid data blocks in the first data frame are n₃ and m₃ respectively. The adjustment module is specifically configured to adjust, based on a ratio between the sixth rate and the fifth rate, the clock frequencies used for PCS descrambling and decoding on the valid data blocks by the second communication device to n₄ and m₄, where a ratio between n₃ and n₄ is the same as the ratio between the sixth rate and the fifth rate, and a ratio between m₃ and m₄ is the same as the ratio between the sixth rate and the fifth rate.

According to a fifth aspect, this application provides a first communication device, including a processor, a memory, and instructions that are stored in the memory and that can be run on the processor. When the instructions are run, the first communication device is caused to perform the method in any one of the possible implementations of the first aspect.

According to a sixth aspect, this application provides a second communication device, including a processor, a memory, and instructions that are stored in the memory and that can be run on the processor. When the instructions are run, the second communication device is caused to perform the method in any one of the possible implementations of the second aspect.

According to a seventh aspect, this application provides a data transmission system, including a sending device and a receiving device. The sending device includes a module configured to perform the method in any one of the possible implementations of the first aspect, and the receiving device includes a module configured to perform the method in any one of the possible implementations of the second aspect.

According to an eighth aspect, this application provides a chip, including a processor, a memory, and a data interface. The processor reads, through the data interface, instructions stored in the memory, to cause the chip to perform the method in any one of the possible implementations of the first aspect or the second aspect.

According to a ninth aspect, this application provides a computer program product. The computer program product includes a computer program (which may also be referred to as code or instructions). When the computer program is run, a computer is caused to perform the method in any one of the possible implementations of the first aspect or the second aspect.

According to a tenth aspect, this application provides a computer-readable storage medium, configured to store computer program instructions. When the computer program instructions are run on a computer, the computer is caused to perform the method in any one of the possible implementations of the first aspect or the second aspect.

### BRIEF DESCRIPTION OF DRAWINGS

FIG. 1 is a diagram of an architecture of an Ethernet system according to an embodiment of this application;
FIG. 2 is a diagram of an open system interconnection seven-layer model according to an embodiment of this application;
FIG. 3 is a diagram of an encoding process at a physical coding sublayer according to an embodiment of this application;
FIG. 4 is a diagram of an electrical cable test technology according to an embodiment of this application;
FIG. 5 is a schematic flowchart of a data transmission method according to an embodiment of this application;
FIG. 6 is a schematic flowchart of another data transmission method according to an embodiment of this application;
FIG. 7 is a flowchart of data encoding and decoding according to an embodiment of this application;
FIG. 8 is a diagram of a structure of a data transmission apparatus according to an embodiment of this application;
FIG. 9 is a diagram of a structure of another data transmission apparatus according to an embodiment of this application; and
FIG. 10 is a diagram of a hardware structure of a data transmission apparatus according to an embodiment of this application.

### DESCRIPTION OF EMBODIMENTS

The following describes technical solutions in this application with reference to accompanying drawings.

An Ethernet is a computer local area network technology, and is defined in the standard IEEE 802.3 of the IEEE organization. Ethernet communication standards specify content including physical layer connections, electronic signals, media access layer protocols, and the like. A conventional Ethernet usually uses an electrical cable or an optical cable as a transmission medium. For example, in the Ethernet, a connection may be established through a twisted pair in the electrical cable, or a connection may be established through an optical fiber in the optical cable.

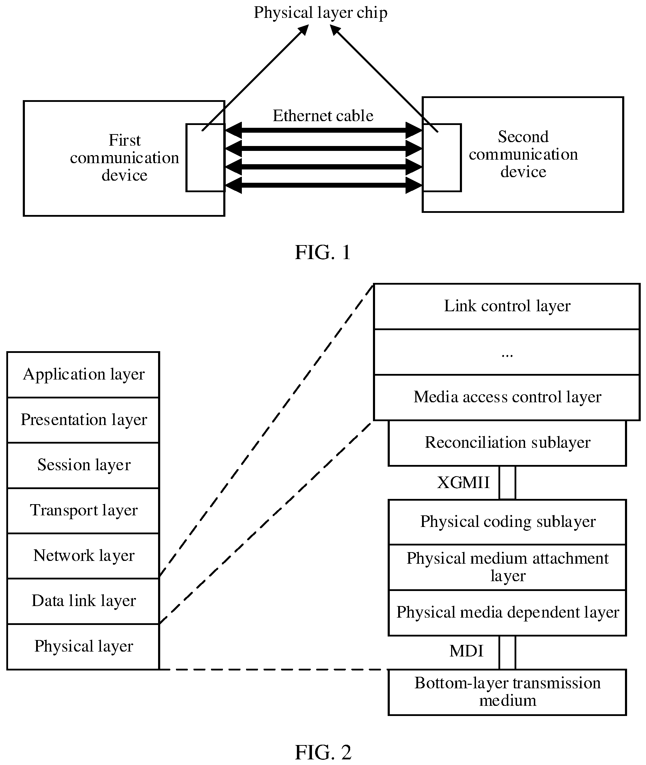

FIG. 1 is a diagram of an architecture of an Ethernet system according to an embodiment of this application. As shown in FIG. 1, the Ethernet system includes a first communication device and a second communication device. Network communication and data transmission at a specific rate are implemented between a physical (physical, PHY) layer chip of the first communication device and a physical layer chip of the second communication device through four Ethernet cables. In other words, each double-arrow straight line shown in FIG. 1 indicates full-duplex transmission of one Ethernet cable. Each Ethernet cable may be each twisted pair or each pair of optical fibers. One optical fiber in one pair of optical fibers is used to send a data signal, and the other is used to receive a data signal; and two wires in one twisted pair are respectively used for transmission of differential signals with equal amplitudes and opposite phases. The advantage is that a capability of external electromagnetic interference resistance is strong, and reliability of transmission and receiving is improved. For example, an Ethernet communication standard shown in FIG. 1 may be 1000BASE-T, 2.5GBASE-T, 5GBASE-T, or 10GBASE-T defined in the IEEE 802.3 standard, in other words, the Ethernet shown in FIG. 1 may be an Ethernet over which full-duplex transmission is performed at 1 Gb/s, 2.5 Gb/s, 5 Gb/s, and 10 Gb/s through four twisted pairs.

It should be understood that the foregoing Ethernet transmission rates such as 1 Gb/s, 2.5 Gb/s, 5 Gb/s, and 10 Gb/s are all rates of valid data in a data frame, and are not transmission rates of the data frame through the Ethernet cables. For example, if a length of the data frame is 100 bits, where the data frame actually carries 90-bit valid data, and if the rate at which transmission of the data frame is performed through the Ethernet cables is 1 Gb/s, the transmission rate of the valid data in the data frame is 900 Mb/s. For ease of description, a "transmission rate" described below is a transmission rate of valid data, and a "data frame transmission rate" is a transmission rate of a data frame. A ratio between the "transmission rate" and the "data frame transmission rate" is a ratio between a length of the valid data in the data frame and a length of the data frame.

In embodiments of this application, the first communication device and the second communication device may be network devices such as switches. In other words, the scenario shown in FIG. 1 is interconnection between the two network devices. Optionally, one of the first communication device and the second communication device may be a network device like a switch, and the other may be a terminal device like a personal computer, a printer, or a camera. In other words, the scenario shown in FIG. 1 is interconnection between the network device and the terminal device. In some other embodiments of this application, the scenario shown in FIG. 1 may alternatively be interconnection between two terminal devices, for example, interconnection between a personal computer and a camera.

Optionally, in some other embodiments of this application, the architecture of the Ethernet system may further include more communication devices, in other words, the architecture of the Ethernet system may include more than two communication devices for interconnection. For example, the PHY chip of the first communication device is connected to the second communication device through two of the four Ethernet cables, and is connected to a third communication device through the remaining two Ethernet cables. Similarly, PHY chips of the first communication device and a fourth communication device are interconnected with the second communication device and the third communication device through the Ethernet cables, and finally a scenario in which the four communication devices are interconnected is formed.

That Ethernet communication standards are 2.5GBASE-T and 5GBASE-T is used as an example. In this case, transmission rates of each Ethernet cable, that is, each twisted pair, shown in FIG. 1 are 625 Mb/s and 1.25 Gb/s respectively, and transmission rates of four twisted pairs are 2.5 Gb/s and 5 Gb/s respectively. Transmission of data in an Ethernet is performed by using a one-dimensional PAM16 symbol, and each PAM16 symbol carries 4-bit information, where valid information is 3.125 bits. Then, correspondingly, data frame transmission rates in 2.5GBASE-T and 5GBASE-T are 3.2 Gb/s (2.5×4/3.125) and 6.4 Gb/s respectively. When the Ethernet communication standard is 2.5GBASE-T, transmission is performed at a baud rate of 200 MBd through each twisted pair. When the Ethernet communication standard is 5GBASE-T, transmission is performed at a baud rate of 400 MBd through each twisted pair. Content described in this paragraph and a specific encoding and transmission process are described below. Details are not described herein again.

It should be understood that pulse amplitude modulation (pulse amplitude modulation, PAM) is a modulation mode in which an amplitude of a pulse carrier signal changes with an analog signal (which may also be referred to as an original signal). The baud rate indicates a modulation rate of a pulse carrier signal carried on the original signal, and may be understood as a quantity of times that a baud modulation status is changed in a unit time, in other words, a quantity of PAM element symbols transferred in a unit time.

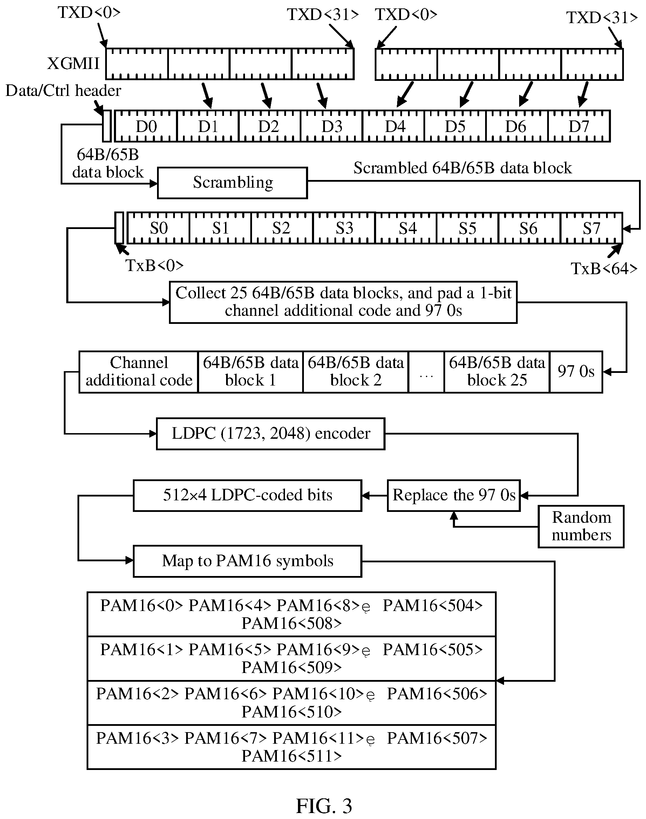

For ease of understanding, the following describes an Ethernet encoding process in embodiments of this application with reference to FIG. 2 and FIG. 3.

FIG. 2 is a diagram of a structure of an open system interconnection (open system interconnect, OSI) seven-layer model. As shown in FIG. 2, based on the OSI, a network is divided into seven layers: a physical layer, a data link layer, a network layer, a transport layer, a session layer, a presentation layer, and an application layer from bottom to top. Four layers from the physical layer to the transport layer are responsible for data transmission over an underlying physical network, and three layers from the session layer to the application layer are responsible for data transmission between hosts.

Further, as shown in FIG. 2, the data link layer may include a link control (logic link control, LLC) layer, a media access control (media access control, MAC) layer, and the like, and the physical layer may include a reconciliation sublayer (reconciliation sublayer, RS), a physical coding sublayer (physical coding sublayer, PCS), a physical media attachment (physical media attachment, PMA) layer, a physical media dependent (physical media dependent, PMD) layer, and the like.

The MAC layer is responsible for constructing a frame by using bit streams "0" and "1" at the physical layer, and performing an error check by using error check information at a tail of the frame. At a MAC sublayer, a physical address of a target computer is added to a data frame. After the data frame is transmitted to a MAC layer of a receive end, the receive end checks whether the address matches an address of the receive end, or checks whether the data frame needs to be forwarded based on a forwarding table stored in the receive end. If the address in the data frame matches the address of the receive end, the receive end sends the data frame to an upper layer; or if the address in the data frame does not match the address of the receive end, the receive end checks whether the data frame needs to be forwarded based on the forwarding table stored in the receive end. In embodiments of this application, the MAC layer is used to transmit valid data to the physical layer.

The RS and a 10G bit media independent interface (10 gigabit media independent interface, XGMII) are between the MAC layer and the PCS. At the RS, serial/parallel and parallel/serial conversion of a serial data stream at the MAC layer and a parallel data stream at the XGMII is processed, and a link status is monitored. The XGMII is connected to the MAC layer in an upward direction, and provides a transmission capability by using a bus with a width of 32 bits. In some other embodiments of this application, another media independent interface (media independent interface, MII) like a 40G media independent interface (40 Gigabit Media Independent Interface, XLGMII) or a 100G media independent interface (100 Gigabit Media Independent Interface, CGMII) may alternatively be used between the MAC layer and the physical layer. This is not limited in this application.

At the PCS, encoding and decoding at the physical layer are mainly implemented. For example, in a transmit direction, an XGMII signal is encoded and then an encoded signal is sent to the PMA layer; and in a receive direction, a signal received from the PMA is decoded into a corresponding XGMII signal. The PCS may have a plurality of coding schemes, such as 8B/10B, 64B/65B, or 64B/66B. A specific coding process depends on an Ethernet communication standard. The PCS layer may further perform forward error correction (forwarding error correction, FEC) coding, to mainly implement a bit error correction process.

It should be understood that FEC is an error control manner, and refers to the following technology: A signal is encoded in advance according to a specific algorithm before the signal is sent to a transmission channel and redundant code having a feature of the signal is added; and at a receive end, the received signal is decoded according to a corresponding algorithm, so that error code generated during transmission is found and corrected. The FEC technology can reduce a bit error rate and effectively improve system performance. In some embodiments of this application, FEC coding may be coding based on Reed-Solomon code (reed-solomon code, RS code), convolutional code, low-density parity-check (low-density parity-check code, LDPC) code, polar code, or the like.

In Ethernet communication standards such as 2.5GBASE-T, 5GBASE-T, and 10GBASE-T in embodiments of this application, at the PCS, 64B/65B encoding is performed on 64-bit valid data from the XGMII to form a 64B/65B data block, a plurality of 64B/65B data blocks are collected for low-density parity-check (low-density parity-check code, LDPC) encoding, to obtain a 2048-bit LDPC frame, then the 2048-bit LDPC frame is mapped to 512 Gray code PAM16 symbols, and the 512 Gray code PAM16 symbols are transmitted to the 4-lane PMA layer.

FIG. 3 shows an architecture of a PCS and a data encoding process at the PCS according to an embodiment of this application. At the PCS, data is processed by modules such as a 64B/65B encoding module, a scrambling module (Scrambler), an LDPC encoder module, a random number replacement module, and a PAM16 mapping module.

At the PCS, data is received from a MAC layer through an XGMII. The XGMII is 32-bit wide, and a total of 64 bits over two XGMIIs form a data block.

The 64B/65B encoding module adds one bit before each received 64-bit data block as a control word Data/Ctrl header to represent whether the data block is a data block or a control block (header-0 represents data, and header-1 represents control). In this way, a 65-bit data block is formed.

A purpose of the scrambling module is to reduce consecutive 0s or consecutive 1s in the data block, make a spectrum of a scrambled signal more suitable for baseband transmission, so as to finally obtain a scrambled 64B/65B data block. For ease of description, the scrambled 65-bit data block is referred to as a valid data block below, to reflect that the data block includes valid information sent over the MAC layer.

For example, as shown in FIG. 3, 2.5GBASE-T and 5GBASE-T are used as an example. At the PCS, 25 64B/65B data blocks are collected to obtain one data block sequence or one data block group, a 1-bit channel additional code is added before the data block group, and 97 0s or 97 random numbers are added after the data block group, to finally form a 1723-bit data frame. A 2048-bit LDPC data frame is generated based on the 1723-bit data frame by using an LDPC (1723, 2048) encoder, and 325-bit LDPC check bits in total are added to the 1723-bit data frame, to protect integrity of each 1723-bit data frame. Optionally, to eliminate long consecutive 0s, the random number replacement module replaces the 97 0s with random numbers.

Finally, the PAM16 mapping module maps, to PAM16 according to a Gray mapping rule, the LDPC frame obtained through encoding, to obtain 512 PAM16 symbols (symbol), and each PAM16 symbol may represent 4-bit information. As described above, each LDPC frame has 2048 bits in total, and valid data is 25×64 bits in the 25 64B/65B data blocks collected at the PCS. Therefore, valid information carried in each PAM16 symbol is 3.125 bits (25×64/512=3.125). Therefore, via the LDPC encoder and PAM16 mapping module, in 2.5GBASE-T and 5GBASE-T, transmission is performed at a baud rate of 200 (2500/(3.125×4)) MBd and 400 (5000/(3.125×4)) MBd through each twisted pair.

For another example, a PCS encoding process defined in 10GBASE-T is slightly different from that in FIG. 3. At the PCS, 50 64B/65B data blocks are collected to obtain one data block group, one channel additional code is added before the data block group, and an 8-bit cyclic redundancy check (cyclic redundancy check, CRC) code is added after the data block group, to finally form a 3259-bit data frame. The data frame includes 3×512 bits transmitted in an unprotected manner, 1723-bit data transmitted in an LDPC (1723, 2048) protected manner, and 325-bit LDPC check bits, and a total of 7×512 bits are included.

Finally, a total of 512 128DSQ codes (3×512+4×512=512 7-bit tag frames, and 7 bits correspond to 128 codes in total), that is, a matrix formed by 1024 PAM16 (one 128DSQ is formed by two PAM16s in back-to-back mode) symbols is needed. In this way, this is equivalent to that each PAM16 symbol carries 3.125-bit (64×50/1024=3.125) information, and a baud rate on a twisted pair is 800 (10000/(3.125×4)) MBd.

The PMA layer is mainly used to implement PCS connection to a plurality of physical media, which mainly includes: adapting a PCS lane to a PMD lane, changing a quantity of PMD lanes, changing a data clock, and the like. The PMD layer is mainly used to define a parameter of a physical interface that is connected to a transmission medium, for example, a wavelength of an optical signal over an optical interface, a type of a connected optical fiber, and a transmission distance. The medium dependent interface (medium dependent interface, MDI) is connected to a bottom-layer transmission medium in a downward direction, that is, the foregoing electrical cable or optical cable.

The PMA mainly performs the following five functions: PHY Control, PMA Transmit, PMA Receive, Link Monitor, and Clock Recovery. For example, the PMA transmit function includes four transmitters, which generate pulse amplitude modulation signals for four wire pairs, and then transfer the signals to the MDI through Tomlinson-Harashima precoding (tomlinson-harashima precoding, THP), a transmitter filter, a digital-to-analog converter (digital-to-analog convertor, DAC), and an analog filter. Sending of the signals through four channels references a same clock TX_TCLK and needs to meet a same electrical performance indicator. When the physical layer is in a master mode, TX_TCLK references a local clock. When the physical layer is in a slave mode, TX_TCLK references a recovery clock. The PMA receive function includes four receivers, which perform pulse amplitude modulation signal recovery of four wire pairs. To achieve good performance, the receive function performs processing such as equalization, echo interference suppression, and crosstalk suppression on receiving. In addition, pair swaps and crossovers are detected and processed by using a training sequence. The PHY control function defines functions such as training, sending control, power back off (Power Back off, PBO), signal-to-noise ratio (signal to interference plus noise ratio, SNR) detection, counting, and fast retransmission.

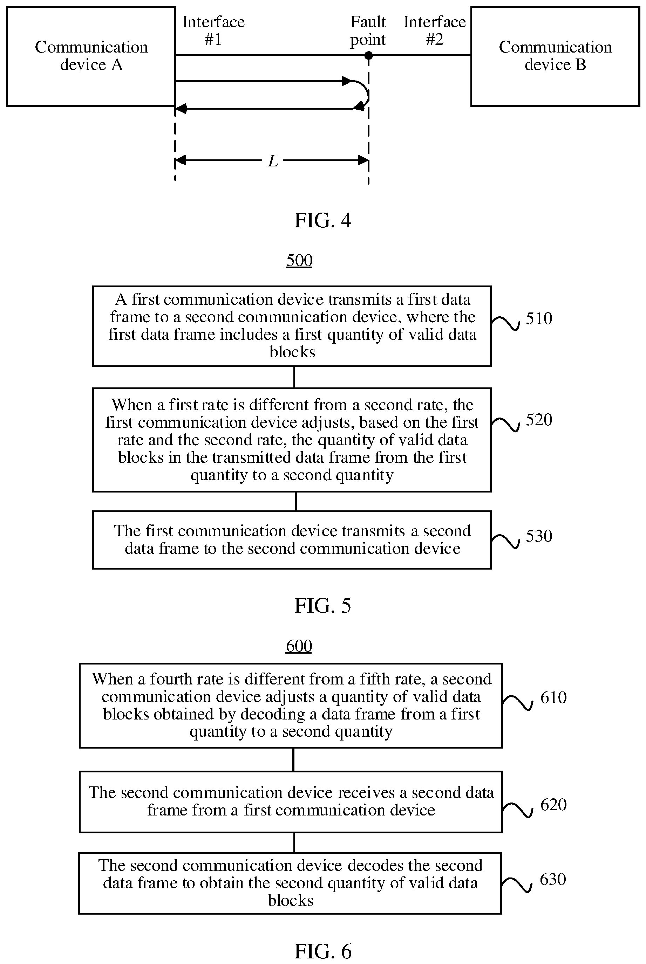

The following describes the technical solutions in this application with reference to FIG. 4 to FIG. 7.

In actual application of an Ethernet, due to reasons such as dragging during construction, loose crimping of a cable connector, and aging of a connector crimping piece, a fault easily occurs in an Ethernet cable like an electrical cable or an optical cable, and at least one Ethernet cable in the Ethernet may easily fail to perform communication. Currently, because 1000BASE-T, 2.5GBASE-T, 5GBASE-T, and 10GBASE-T in the foregoing standard all need four twisted pairs to implement network communication, if the foregoing wire pair fault appears, auto-negotiation for a mode that supports 10BASE-T and 100BASE-TX is performed according to the standard, and a transmission rate sharply drops to 10 Mb/s or 100 Mb/s. In this case, a link bandwidth and user experience are directly affected.

In embodiments of this application, a current cable detection method may be used to determine an Ethernet cable in a normal operating state. For example, a virtual cable test (virtual cable test, VCT) technology may be selected for electrical cable detection, and a time domain reflectometry (time domain reflectometry, TDR) technology is used to detect whether an electrical cable is in a faulty state or a normal state. A detection principle of the TDR is similar to that of a radar. A working manner of the TDR is detecting, by proactively transmitting a pulse signal to an electrical cable and detecting a reflection result of the transmitted pulse signal, whether a fault occurs in the electrical cable. When the transmitted pulse signal passes through an end of the electrical cable or a fault point of the electrical cable, a part or all of pulse energy is reflected back to an original send source. In the VCT technology, time at which the signal reaches the fault point or is returned is obtained by measuring transmission of the pulse signal in a conducting wire, and then the corresponding time is converted into a distance value. The VCT technology can be used to detect an electrical cable status, a distance from the fault, whether a polarity swap is performed, insertion signal attenuation, return signal attenuation, and the like.

FIG. 4 is a diagram of a VCT technology. As shown in FIG. 4, an interface #1 of a communication device A is connected to an interface #2 of a communication device B through an electrical cable, and a fault point exists in the electrical cable. After VCT detection is configured on the interface #1, a system generates a pulse signal, and partial energy is reflected back after the signal reaches the fault point. Assuming that a distance between the network device A and the fault point is L, an interval between time of sending the pulse and time of receiving the reflected pulse is T, and a transmission speed of the signal in the electrical cable is V, Formula (1) for calculating a distance between the fault point and the interface #1 is as follows: $L = \left(V\times T\right) / 2$

When L is less than a total length of the electrical cable, it indicates that the electrical cable has a fault point.

Analysis is performed based on the PCS and the PMA layer shown in FIG. 2 and FIG. 3. Theoretically, in communication standards of 2.5GBASE-T and 5GBASE-T, another Ethernet cable in a normal operating state can still maintain a high transmission rate. For example, if two of four Ethernet cables are faulty, the other two Ethernet cables in the normal operating state can still implement a transmission rate of 1.25 Gb/s or 2.5 Gb/s. In this case, it only needs to keep, at the PMA layer, the two Ethernet cables in the normal operating state operating based on a modulation format and a baud rate of a normal mode. Keeping the modulation format unchanged can make a configuration of the PMA layer change slightly, and can also maintain a high communication rate. A reason for keeping the baud rate unchanged is that the baud rate is related to an equalization coefficient of a line channel. If the baud rate is adjusted, the equalization coefficient of the line channel needs to be re-trained, which causes a long rate switching delay.

However, in specific implementation, if a transmission rate of the four Ethernet cables is 1.25 Gb/s, a transmission rate of an XGMII between the PCS and a MAC layer is better to be 1.25 Gb/s. In this way, transmission rates at two ends of a physical layer are completely equal. However, because a rate of the MAC layer is not particularly flexible, and not all types of MAC rates can be supported, for example, an optional MAC rate may be only 1 Gb/s, 2.5 Gb/s, 5 Gb/s, or the like, when the transmission rate of the Ethernet cables is 1.25 Gb/s, only the closest 1 Gb/s can be selected as the transmission rate of the MAC layer. An operating rate of the MAC layer is only 1 Gb/s. Therefore, the physical layer has a redundant bandwidth of 0.25 Gb/s.

To resolve the foregoing problem that the rate of the MAC layer does not match the transmission rate of the Ethernet cables, FIG. 5 in an embodiment of this application shows a data transmission method 500. The method 500 includes steps 510 to 530, and may be applied to the first communication device shown in FIG. 1, in other words, a sending device in an Ethernet system. According to the method 500, by using a quantity of valid data blocks in a data frame transmitted by a communication device, when a part of wire pairs in Ethernet cables are faulty, a high total transmission rate of an Ethernet can be further maintained, a transmission rate of valid data can adapt to a specific MAC rate, a configuration change of a PMA layer is minimized, hardware implementation complexity is low, and a delay is short.

The method 500 may be applied to the physical layer chip of the first communication device shown in FIG. 1. The physical layer chip may be integrated into the foregoing network device or terminal device, or may be independently disposed in a pluggable electrical module.

Step 510: The first communication device transmits a first data frame to a second communication device, where the first data frame includes a first quantity of valid data blocks.

A scenario of data transmission between the first communication device and the second communication device may be the Ethernet scenario shown in FIG. 1, that is, network communication and data transmission are performed through a plurality of Ethernet cables. In this embodiment of this application, step 510 is a transmission process when no fault occurs in the Ethernet. FIG. 1 is used as an example. Step 510 is that the first communication device performs data transmission or network communication with the second communication device through the four Ethernet cables. For example, when an Ethernet communication standard is 2.5GBASE-T, the transmission rate of the valid data in the first data frame is 2.5 Gb/s, and a data frame transmission rate of the first data frame is 3.2 Gb/s. When an Ethernet communication standard is 5GBASE-T, the transmission rate of the valid data in the first data frame is 5 Gb/s, and a data frame transmission rate of the first data frame is 6.4 Gb/s.

It should be understood that FIG. 1 is merely an example. In embodiments of this application, a quantity of Ethernet cables in a first Ethernet link may alternatively be any value greater than or equal to 2, for example, the quantity may be 8, 16, or the like.

Step 520: When a first rate is different from a second rate, the first communication device adjusts, based on the first rate and the second rate, the quantity of valid data in the transmitted data frame from the first quantity to a second quantity.

The first rate is a rate at which the first communication device transmits the valid data in the data frame, and the second rate is a rate at which data is transmitted over a media access control MAC layer of the first communication device. A case in which the first rate is different from the second rate may occur when a part of wire pairs in the Ethernet cables are faulty, or may occur when only a part of wire pairs in the plurality of Ethernet cables shown in FIG. 1 are selected. For example, when the Ethernet communication standard is 2.5GBASE-T, a rate at which transmission of the valid data in the first data frame is performed through four twisted pairs between the communication devices is 2.5 Gb/s. If one of the four twisted pairs is faulty, the other three twisted pairs in a normal operating state can still implement a transmission rate of 1.875 Gb/s (2.5×3/4), that is, the first rate may be 1.875 Gb/s. However, because the first rate at which the data is transmitted over the MAC layer of the communication device is not particularly flexible, and not all types of rates of the MAC layer can be supported, for example, an optional first rate of the MAC layer may be only 1 Gb/s, 2.5 Gb/s, 5 Gb/s, or the like, when the first rate is 1.875 Gb/s, only the closest second rate that is 1 Gb/s can be selected. In this case, the first rate may be different from the second rate.

The second rate is not greater than the first rate. For example, when the first rate is 1.25 Gb/s, the second rate may be selected as 1 Gb/s. In this case, the second rate is less than the first rate. When the first rate is 2.5 Gb/s, the second rate may be selected as 2.5 Gb/s. In this case, the second rate is the same as the first rate.

Currently, an optional second rate may be a standard rate like 1 Gb/s, 2.5 Gb/s, or 5 Gb/s. In some other embodiments of this application, a flexible Ethernet (Flexible Ethernet, FlexE) technology may be used to flexibly adjust the rate of the MAC layer. For example, when a second Ethernet link in step 520 is three of the four Ethernet cables, the MAC rate may be adjusted to 1.5 Gb/s by using the FlexE technology, so that more second rates are optional. The foregoing 1.5 Gb/s is merely an example, and the MAC rate obtained through flexible adjustment by using the FlexE technology is not limited in this application.

The process of encoding the data frame at the PCS shown in FIG. 3 is used as an example. At the PCS, the data frame is encoded by using an LDPC method, and the valid data block in step 520 is the 64B/65B code block in FIG. 3. In step 520, at a PCS of the first communication device, the quantity of valid data blocks collected when the data frame is encoded may be adjusted, for example, adjusted to 20 64B/65B code blocks, so that the quantity of valid data in the data frame is reduced, and the first rate at which data is transmitted through the Ethernet cables can be reduced to the second rate, in other words, the first rate is caused to adapt to the second rate.

In this embodiment of this application, an implementation of step 520 may be adjusting a preset quantity of padding bits when FEC encoding is performed on data frames at the PCS of the first communication device. For example, the encoding process shown in FIG. 3 is used as an example. An original preset quantity of padding bits when the data frame is encoded is one channel additional code and 97 0s or 97 random numbers, in other words, 98 bits are padded once when 25 valid data blocks are collected, and then the first data frame is obtained through LDPC encoding. In this embodiment of this application, the preset quantity of padding bits may be modified to one channel additional code and 422 0s (97+(25-20)×65) or 422 random numbers, in other words, 423 bits are padded once when 20 valid data blocks are collected, and then a second data frame is obtained through LDPC encoding.

It should be noted that the valid data block may be the 64B/65B data block shown in FIG. 3, or may be a 128B/129B data block, a 256B/257B data block, or the like that may appear in the future. This is not limited in this application. A FEC encoding scheme of the PCS may be the LDPC encoding shown in FIG. 3, or may be encoding based on the Reed-Solomon code (reed-solomon code, RS code), the convolutional code, the polar code, or the like mentioned above.

Step 530: The first communication device transmits the second data frame to the second communication device.

Specifically, a data frame transmission rate of the second data frame is not changed compared with that before adjustment. However, because a length of valid data in the second data frame is less than a length of the valid data in the first data frame, a rate at which the valid data is transmitted over each Ethernet cable may be reduced, so that the first rate can adapt to the second rate at which the data is transmitted over the MAC layer.

Finally, the first communication device transmits the adjusted data frame to the second communication device via the PAM mapping module shown in FIG. 3. Correspondingly, when receiving the adjusted data frame, the second communication device also needs to correspondingly adjust a data decoding process.

According to the method 500, the data transmission rate of the Ethernet cables can adapt to the rate of the MAC layer of the communication device, and a data frame transmission rate of each Ethernet cable remains unchanged by keeping a modulation format and a baud rate of a normal wire pair unchanged. In addition, a PMA layer is slightly changed, hardware implementation complexity is low, and a delay is short.

Correspondingly, FIG. 6 in an embodiment of this application shows another data transmission method 600. The method 600 includes steps 610 to 630, and may be applied to the second communication device shown in FIG. 1, in other words, a receiving device in an Ethernet system. The method 600 may be applied to the physical layer chip of the second communication device shown in FIG. 1. The physical layer chip may be integrated into the foregoing network device or terminal device, or may be independently disposed in a pluggable electrical module.

Step 610: When a fourth rate is different from a fifth rate, the second communication device adjusts a quantity of valid data blocks obtained by decoding a data frame from a first quantity to a second quantity.

The fourth rate is a rate at which the second communication device receives valid data in the data frame, the fifth rate is a rate at which data is received over a media access control MAC layer of the second communication device, and the first quantity is, when the fourth rate is the same as the fifth rate, a quantity of valid data blocks obtained by the second communication device by decoding a first data frame.

It should be understood that the first communication device is connected to the second communication device through an Ethernet cable. Therefore, a value of a first rate is the same as a value of the fourth rate, and a value of a second rate is the same as a value of the fifth rate. In other words, when the first rate is different from the second rate, the fourth rate is also different from the fifth rate. Further, after the first communication device adjusts the quantity of valid data blocks in the transmitted data frame, the second communication device also needs to adjust the quantity of valid data blocks obtained by decoding the data frame, to obtain the second quantity of valid data blocks in a second data frame.

Step 620: The second communication device receives the second data frame from the first communication device.

Step 620 corresponds to step 530 in which the first communication device transmits the second data frame to the second communication device.

Step 630: The second communication device decodes the second data frame to obtain the second quantity of valid data blocks.

Correspondingly, a decoding process of the second communication device is opposite to an encoding process of the first communication device, and includes FEC decoding, separating the valid data blocks, descrambling and decoding the valid data blocks, and the like. In step 610, a quantity of the valid data blocks obtained by separating the valid data blocks is adjusted.

An implementation of the method 600 is a decoding process corresponding to the encoding implementation of the method 500. For a specific implementation and beneficial effects of the method 600, refer to the descriptions in the method 500. Details are not described herein again.

The following specifically describes implementation processes of the method 500 and the method 600 with reference to the embodiments. The embodiments are described by using that an Ethernet communication standard is 2.5GBASE-T as an example.

An architecture of an Ethernet system is shown in FIG. 1. When all four Ethernet cables operate normally, a first communication device transmits a first data frame to a second communication device, and a transmission rate of valid data in the first data frame is 2.5 Gb/s. A PCS encoding process of the first communication device is shown in FIG. 3.

If it is determined, by using the foregoing VCT technology, that only two of the four Ethernet cables are in a normal operating state, a new Ethernet link may be determined from the Ethernet cables in the normal operating state, where the new Ethernet link includes the two Ethernet cables in the normal operating state. In this case, a first rate of the first communication device is 1.25 Gb/s (2.5×2/4), and correspondingly, a data frame transmission rate of the two Ethernet cables is 1.6 Gb/s. Optional rates of a MAC layer that are not greater than the first rate, namely, second rates, are 100 Mb/s and 1 Gb/s. Therefore, the first communication device may select 1 Gb/s that is closest to the first rate as the second rate, in other words, the second rate at which data is transmitted over the MAC layer of the first communication device is 1 Gb/s.

It can be learned from the foregoing that, because the second rate 1 Gb/s of the MAC layer is different from the first rate 1.25 Gb/s, in step 520, a modulation format and a baud rate of the two Ethernet cables in the second Ethernet link remain unchanged. A quantity of valid data blocks in the data frame is adjusted, so that a transmission rate of the valid data through the Ethernet cables can adapt to the rate of the MAC layer, and a high total transmission rate of the Ethernet link is still maintained.

In step 520, the first communication device may adjust, based on a ratio between the first rate and the second rate, the quantity of valid data blocks in the data frame transmitted by the first communication device, or specifically, adjust the quantity of valid data blocks collected when FEC encoding is performed on the data frame at the PCS of the first communication device, that is, the quantity of 64B/65B data blocks collected when LDPC encoding is performed on the data frame at the PCS shown in FIG. 3. When the Ethernet communication standard is 2.5GBASE-T, a basis for adjustment is Formula (2) and Formula (3): $n \times 65 + x = m \times 1723$ $\left(n\times 65\right) / \left(25\times 65\right) = m \times {V}_{2} / {V}_{1}$

*n*, *x*, and *m* are all positive integers. *n* is a quantity of 64B/65B data blocks after adjustment. *x* is a total of a padded channel additional code and padded 0s or random numbers, and a total length of the padded channel additional code and the padded 0s or random numbers should be a multiple of 1723. *m* is a quantity of LDPC codewords, and may be further used for LDPC (1723, 2048) encoding. (*n*×65) is a quantity of bits of valid data in a second data frame after adjustment, and (25×65) is a quantity of bits of the valid data in the first data frame before adjustment. V₁ is the first rate, and V₂ is the second rate. The foregoing case in which the second rate is 1.25 Gb/s and the third rate is 1 Gb/s is substituted into the foregoing formula, and it may be learned that *n* is 20, *x* is 423, and *m* is 1. In other words, the quantity of valid data blocks in the data frame transmitted by the first communication device is adjusted from 25 shown in FIG. 3 to 20, that is, the quantity of 64B/65B data blocks collected when LPDC encoding is performed on the data frame is 20.

A basis for determining an adjusted quantity of valid data blocks based on the ratio between the first rate and the second rate is formula (4): $S = V / \left(N\times a\right)$

S is a baud rate of each Ethernet cable, V is a total transmission rate of Ethernet cables, N is an amount of valid information carried in each PAM symbol, and a is a quantity of Ethernet cables in the Ethernet link. For example, when the Ethernet communication standard is 2.5GBASE-T, V is 2.5 Gb/s, N is 3.125 (25×64/512), and a value of a is 4. Therefore, when the Ethernet communication standard is 2.5GBASE-T, it may be learned according to the formula that the baud rate of each Ethernet cable is 200 MBd.

When only the foregoing two Ethernet cables are available, the transmission rate of the MAC layer, namely, the second rate, is 1 Gb/s. Because the baud rate remains unchanged, and the rate for transmitting the valid data and the quantity of Ethernet cables are changed, the amount of the valid information carried in each PAM symbol is changed. That S is 200 MBd, a is 2, and V is 1 Gb/s is substituted into the formula, and it may be learned that N is 2.5 bit/symbol. In other words, the valid information carried in each symbol is reduced to 2.5 bits.

In addition, because a final quantity of PAM16 symbols in the LDPC encoding process is 512, the valid data is 512×2.5=20×64 bits. Therefore, when the 20 64B/65B data blocks are collected when LDPC encoding is performed on the data frame at the PCS, the transmission rate of transmitting the valid data through the two Ethernet cables may adapt to the second rate 1 Gb/s of the MAC layer, that is, the first rate is reduced from 1.25 Gb/s to the second rate 1 Gb/s. It can be learned according to Formula (4) that the ratio between the second rate and the first rate is the same as a ratio between N before adjustment and N after adjustment. In addition, because the quantity of PAM symbols remains unchanged in the encoding process, the ratio between N before adjustment and N after adjustment is a ratio between a length of the valid data before adjustment and a length of the valid data after adjustment. Therefore, the ratio between the second rate and the first rate is the same as the ratio between the length of the valid data before adjustment and the length of the valid data after adjustment and a ratio between the quantity of valid data blocks before adjustment and the quantity of valid data blocks after adjustment.

It may also be learned from the foregoing descriptions that, at the PCS, because only 20 64B/65B data blocks are collected, five 64B/65B data blocks, which are a reduction after adjustment, are replaced with 0s or random numbers. In other words, in comparison with that 97 0s or random numbers are originally added, 325 ((25-20)×65) 0s or random numbers are newly added at the PCS, so that the original LDPC encoding process may remain unchanged. In this way, the transmission rate of the data frame can still be maintained at 1.6 Gb/s. Therefore, in an Ethernet data transmission process, the transmission rate of the valid data can adapt to the third rate of the MAC layer, and the original high data frame transmission rate of the Ethernet cables can still be maintained.

In this embodiment of this application, for the PCS encoding process shown in FIG. 3, a specific manner of adjusting the quantity of 64B/65B data blocks may be adjusting a preset quantity of padding bits when LDPC encoding is performed on the data frames. For example, when the four Ethernet cables all operate normally, 98 bits (97 0s and a 1-bit channel additional code) are padded when 25 64B/65B data blocks are collected at the PCS, and then LDPC check bits are padded through LDPC encoding, to obtain one first data frame. When only the foregoing two Ethernet cables operate normally, 423 bits (422 0s and a 1-bit channel additional code) are padded when 20 64B/65B data blocks are collected, and then LDPC check bits are padded through LDPC encoding, to obtain one second data frame. To ensure direct current balance of transmitted data, the 422 0s may be directly replaced with 422 random numbers.

In addition, for ease of description, the rate at which the valid data is transmitted through the original four Ethernet cables is referred to as a third rate (2.5 Gb/s in this embodiment). Because the transmission rate of the Ethernet link is changed from the third rate to the first rate, and the transmission rate of the MAC layer is changed from the third rate to the second rate, a clock frequency of a module used when LDPC encoding is performed at the PCS needs to be adjusted. First, a 64B/65B encoding process and a scrambling process at the PCS layer are performed before the quantity of valid data blocks is adjusted. Therefore, clock frequencies of a 64B/65B encoding module and a scrambling module need to be adjusted based on a ratio between the third rate and the second rate. In the case of the foregoing embodiment, the clock frequencies of the 64B/65B encoding module and the scrambling module are adjusted to 2/5 (1 Gb/s:2.5 Gb/s) of the original clock frequencies. Second, processes such as LDPC encoding, random number replacement, and PAM16 mapping at the PCS layer are performed after the quantity of valid data blocks is adjusted. Therefore, clock frequencies of the foregoing modules need to be adjusted based on a ratio between the third rate and the first rate. In the case of the foregoing embodiment, the clock frequencies of the modules such as an LDPC encoding module, a random number replacement module, and a PAM16 mapping module are adjusted to 1/2 (1.25 Gb/s:2.5 Gb/s) of the original clock frequencies.

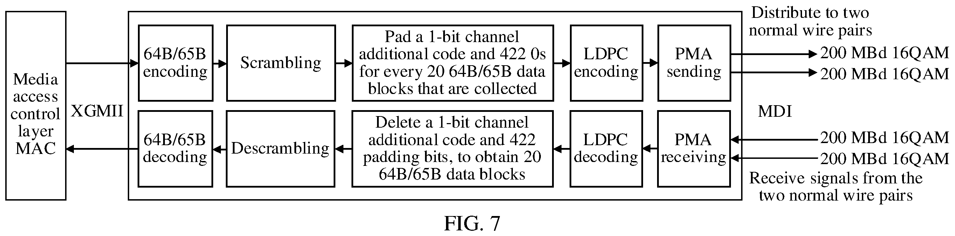

Correspondingly, the second communication device needs to adjust a decoding process at the same time, so that when receiving the second data frame after adjustment sent by the first communication device, the second communication device can successfully separate a second quantity of valid data blocks from the second data frame. FIG. 7 is a schematic flowchart of data encoding and decoding. As shown in FIG. 7, an encoding process includes processes such as 64B/65B encoding, scrambling, bit padding, and LDPC encoding. A corresponding decoding process includes LDPC decoding, bit deletion, descrambling, and 64B/65B decoding processes. A quantity of valid data blocks separated from a data frame is changed to 20, and deletion of bits is changed from original deletion of 98 bits to deletion of 423 bits shown in FIG. 6, and finally 20 64B/65B data blocks are obtained.

It should be noted that a first communication device is connected to a second communication device through an Ethernet cable. Therefore, a first rate at which the first communication device transmits valid data in the data frame is the same as a fourth rate at which the second communication device receives the valid data in the data frame, and a second rate at which data is transmitted over a MAC layer of the first communication device is the same as a fifth rate at which data is transmitted over a MAC layer of the second communication device. The second communication device adjusts, based on the fourth rate and the fifth rate, the quantity of valid data blocks obtained through decoding the data frame. A specific adjustment process is similar to the foregoing adjustment process of the first communication device. Details are not described herein again.

Correspondingly, clock frequencies of modules such as an LDPC decoding module, a bit deletion module, a descrambling module, and a 64B/65B decoding module of the second communication device also need to be adjusted based on the fourth rate, the fifth rate, and a sixth rate at which the second communication device receives a first data frame. An adjustment process is similar to the process in which the first communication device adjusts the clock frequencies. Details are not described herein again.

For another example, the foregoing example describes a case in which only two of four Ethernet cables are in a normal operating state, and the following describes a case in which three of the four Ethernet cables are in the normal operating state. A specific encoding process is described in the foregoing example. Details are not described herein again. In this case, a transmission rate of the three Ethernet cables, namely, the first rate, is 1.875 Gb/s.

Optionally, if optional second rates of the MAC layer are still only 100 Mb/s and 1 Gb/s, the first communication device may select two of the three Ethernet cables to perform data transmission, that is, a case shown in the foregoing example. A reason is that the second rate of the MAC layer is still selected as 1 Gb/s. In this case, a function of selecting the three Ethernet cables is the same as that of selecting only the two Ethernet cables. Selecting only the two Ethernet cables can further save Ethernet link resources and reduce a waste of Ethernet cables.

Optionally, if there is another optional rate that is of the MAC layer and that is flexibly adjusted by using FlexE, for example, 1.5 Gb/s, the first communication device may select the three Ethernet cables as a new Ethernet link. In this case, the second rate is 1.5 Gb/s, and the first rate is 1.875 Gb/s. It may be learned according to Formula (2) and Formula (3) that a value of *n* may be 20, a value of *x* may be 423, and a value of *m* may be 1. In this way, the data of valid data blocks in the data frame transmitted by the first communication device may be adjusted to 20. In other words, a quantity of 64B/65B data blocks collected when LDPC encoding is performed on the data frame at a PCS is adjusted to 20, and a quantity of padding bits is adjusted to 423 bits. An encoding process and a clock frequency adjustment process are the same as those described above. Details are not described herein again.

For another example, if only one of the four Ethernet cables is in the normal operating state, the first rate is 0.625 Gb/s. If an optional MAC rate is only 0.1 Gb/s, 0.1 Gb/s may be selected as the second rate. It may be learned according to Formula (2) and Formula (3) that a value of *n* may be 4, a value of *x* may be 1463, and a value of *m* may be 1. In this way, the quantity of valid data blocks in the data frame transmitted by the first communication device is adjusted to 4. In other words, a quantity of 64B/65B data blocks collected when LDPC encoding is performed on the data frame at a PCS is adjusted to 4, and a quantity of padding bits is 1463 bits. In addition, clock frequencies of a 64B/65B encoding module and a scrambling module are adjusted to 1/25 (0.1 Gb/s:2.5 Gb/s) of the original clock frequencies, and clock frequencies of modules such as an LDPC encoding module, a random number replacement module, and a PAM16 mapping module are adjusted to 1/4 (0.625 Gb/s:2.5 Gb/s) of the original clock frequencies. An encoding process is similar to the foregoing. Details are not described herein again.

In the foregoing example, only a case in which the value of *m* is 1 is listed. If a product of a ratio between the second rate and the first rate and the quantity of valid data blocks before adjustment is not an integer, the value of *m* may be selected as a positive integer greater than 1. For example, assuming that the second rate is 0.94 Gb/s and the first rate is 1.25 Gb/s, *n*=18.8×*m* may be obtained by substituting the second rate and the first rate into Formula (3). It may be learned by substituting the obtained relationship between *n* and *m* into Formula (2) that the value of *m* may be 5, and a value of *n* may be 94. Therefore, when LDPC encoding is performed on a data frame at the PCS of the first communication device, a total quantity of 64B/65B data blocks in every five LDPC data frames is 94, and quantities of 64B/65B data blocks in at least two LDPC data frames are different. A total quantity of padding bits is 2505. A quantity of 64B/65B data blocks and a quantity of padding bits in each data frame may be randomly adjusted, but a length of each data frame needs to be 1723 bits used for LDPC (1723, 2048) encoding.

For another example, when an Ethernet communication standard is 5GBASE-T, an architecture of an Ethernet system is shown in FIG. 1. The first Ethernet link in step 510 includes four Ethernet cables, and a third rate is 5 Gb/s. A PCS encoding process of the first communication device is shown in FIG. 3. When only two Ethernet cables are in the normal operating state, the first rate is 2.5 Gb/s, and an optional MAC rate includes 2.5 Gb/s. Therefore, when the Ethernet communication standard is 5GBASE-T and the two Ethernet cables are selected for data transmission, the quantity of valid data blocks in the data frame does not need to be adjusted.

If the second Ethernet link in step 520 includes one Ethernet cable, the first rate is 1.25 Gb/s. In this case, an optional MAC rate may be 1 Gb/s. Therefore, the second rate may be selected as 1 Gb/s. It may be learned by substituting the first rate and the second rate into Formula (2) and Formula (3) that a value of *n* may be 20, a value of *x* may be 423, and a value of *m* may be 1. This is the same as the case in the first example in the foregoing embodiment. Details are not described herein again.

In some other embodiments of this application, the quantity of valid data blocks in the data frame transmitted by the first communication device may be adjusted for a plurality of times. For example, it can be learned from the foregoing that, when only three Ethernet cables or two Ethernet cables operate normally, the first communication device adjusts, to 20, the quantity of valid data blocks in the transmitted data frame. In this case, if only one Ethernet cable in an Ethernet link operates normally due to a fault, the first rate is 0.625 Gb/s, and the second rate is 0.1 Gb/s. The first communication device may then adjust, to 4, the quantity of valid data blocks in the transmitted data frame.

In addition to the embodiments described above, this application may be further applied to another scenario. For example, this application may be applied to a scenario of an Ethernet optical fiber. For example, when four pairs of optical fibers operating at 100 Gb/s are reduced to only two pairs of optical fibers, the second rate is 50 Gb/s, and the third rate is 40 Gb/s. In this case, the quantity of valid data blocks in the transmitted data frame may be adjusted to 20 according to Formula (2) and Formula (3), in other words, a quantity of valid data blocks collected when FEC encoding is performed on the data frame at the PCS is adjusted to 20. For another example, the quantity of Ethernet cables in the first Ethernet link in step 510 may be 8, 16, or even more, and an available MAC rate may also be more. Details are not described in this application.

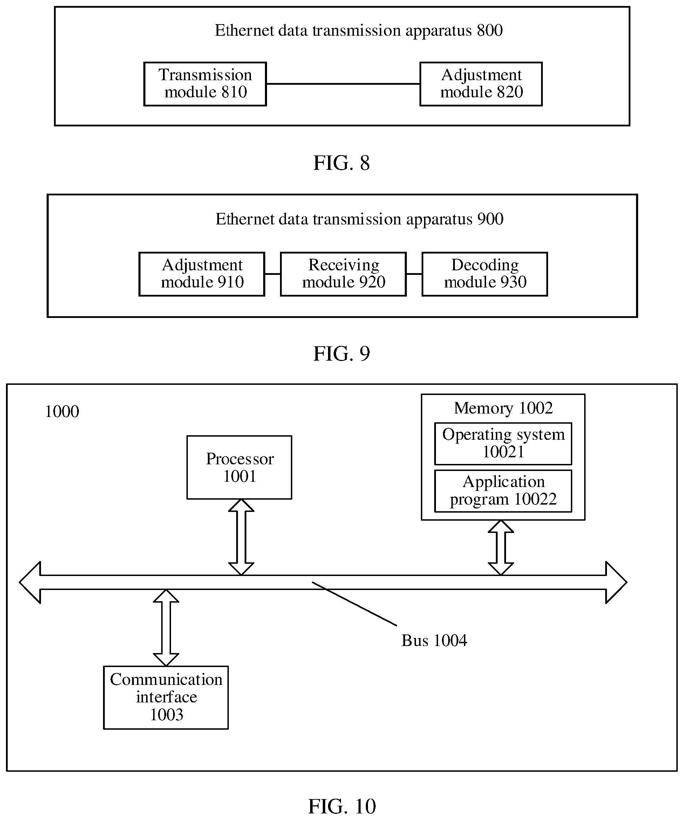

The foregoing describes in detail the methods provided in embodiments of this application with reference to FIG. 1 to FIG. 7. The following describes in detail apparatuses provided in embodiments of this application with reference to FIG. 8 to FIG. 10. It should be understood that descriptions in the method embodiments correspond to descriptions in the apparatus embodiments. Therefore, for a part that is not described in detail, refer to the foregoing method embodiments.

FIG. 8 is a diagram of a structure of a data transmission apparatus 800 according to an embodiment of this application. The apparatus 800 may be a network device, a terminal device, or the like, for example, a network device like a router or a switch, or a terminal device like a personal computer, a printer, or a camera, or may be an apparatus module disposed in the network device or the terminal device. For example, the apparatus 800 may be the first communication device in FIG. 1, or may be an apparatus module disposed in the first communication device. The data transmission apparatus 800 shown in FIG. 8 may be configured to perform corresponding steps of the method in the embodiment shown in FIG. 5, to implement the Ethernet data encoding process shown in FIG. 7. As shown in FIG. 8, the apparatus 800 includes a transmission module 810 and an adjustment module 820.

Specifically, the transmission module 810 is configured to transmit a first data frame to a second communication device, where the first data frame includes a first quantity of valid data blocks.

The adjustment module 820 is configured to: when a first rate is different from a second rate, adjust, based on the first rate and the second rate, the quantity of valid data blocks in the transmitted data frame from the first quantity to a second quantity, to obtain a second data frame after adjustment, where a length of the first data frame is the same as a length of the second data frame, the first rate is a rate at which the first communication device transmits valid data in the data frame, and the second rate is a rate at which data is transmitted over a media access control MAC layer of the first communication device.

The transmission module 810 is specifically configured to transmit the second data frame to the second communication device.

For specific functions and beneficial effects of the transmission module 810 and the adjustment module 820, refer to the descriptions in the foregoing embodiments. For brevity, details are not described herein again.

Correspondingly, FIG. 9 is a diagram of a structure of a data transmission apparatus 900 according to an embodiment of this application. The apparatus 900 may be a network device, a terminal device, or the like, for example, a network device like a router or a switch, or a terminal device like a personal computer, a printer, or a camera, or may be an apparatus module disposed in the network device or the terminal device. For example, the apparatus 900 may be the second communication device in FIG. 1, or may be an apparatus module disposed in the second communication device. The data transmission apparatus 900 shown in FIG. 9 may be configured to perform corresponding steps of the method in the embodiment shown in FIG. 6, to implement the Ethernet data decoding process shown in FIG. 7. As shown in FIG. 9, the apparatus 900 includes an adjustment module 910, a receiving module 920, and a decoding module 930.

The adjustment module 910 is configured to: when a fourth rate is different from a fifth rate, adjust a quantity of valid data blocks obtained by decoding a data frame from a first quantity to a second quantity, where the fourth rate is a rate at which the second communication device receives valid data in the data frame, the fifth rate is a rate at which data is received over a media access control MAC layer of the second communication device, and the first quantity is, when the fourth rate is the same as the fifth rate, a quantity of valid data blocks obtained by the second communication device by decoding a first data frame.

The receiving module 920 is configured to receive a second data frame from a first communication device, where the second data frame includes the second quantity of valid data blocks.

The decoding module 930 is configured to decode the second data frame to obtain the second quantity of valid data blocks.

For specific functions and beneficial effects of the adjustment module 910, the receiving module 920, and the decoding module 930, refer to the descriptions in the foregoing embodiments. For brevity, details are not described herein again.

The apparatus 800 and the apparatus 900 herein may be embodied in a form of functional modules. The term "module" herein may be implemented in a form of software and/or hardware, and this is not specifically limited.

For example, the "module" may be a software program, a hardware circuit, or a combination thereof that implements the foregoing functions. For example, the following uses the transmission module 810 as an example to describe an implementation of the transmission module 810. Similarly, for implementations of other modules, such as the adjustment module 820, the adjustment module 910, the receiving module 920, and the decoding module 930, refer to the implementation of the transmission module 810.

The transmission module 810 is used as an example of a software functional unit, and the transmission module 810 may include code running on a computing instance. The computing instance may include at least one of a physical host (a compute device), a virtual machine, and a container. Further, there may be one or more computing instances. For example, the transmission module 810 may include code running on a plurality of hosts, virtual machines, or containers.

The transmission module 810 is used as an example of a hardware functional unit, and the transmission module 810 may include at least one compute device, for example, a server. Alternatively, the transmission module 810 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

Therefore, modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

FIG. 10 is a diagram of a hardware structure of a communication device 1000 according to an embodiment of this application. For example, the communication device 1000 may be the network device, the terminal device, or the like that is described above, for example, the first communication device or the second communication device in FIG. 1. The communication device 1000 shown in FIG. 10 may be configured to perform the method in the embodiment shown in FIG. 5 or FIG. 6, to implement a data encoding or decoding process shown in FIG. 7.

As shown in FIG. 10, the communication device 1000 includes a processor 1001, a memory 1002, a communication interface 1003, and a bus 1004. The communication interface 1003 may be implemented in a wireless or wired manner, and may be specifically a network interface card. The processor 1001, the memory 1002, and the communication interface 1003 are connected through the bus 1004.

The communication interface 1003 may specifically include a transmitter and a receiver, and is used by the communication device to implement the foregoing receiving and sending process.

The processor 1001 is configured to perform processing performed by the communication device in the foregoing embodiments. The memory 1002 includes an operating system 10021 and an application program 10022, and is configured to store a program, code, or instructions. When executing the program, code, or instructions, the processor or a hardware device may complete a processing process related to the communication device in the method embodiments. Optionally, the memory 1002 may include a read-only memory (read-only memory, ROM) and a random access memory (random access memory, RAM). The ROM includes a basic input/output system (basic input/output system, BIOS) or an embedded system, and the RAM includes an application program and an operating system. When the communication device 1000 needs to be run, a system is booted by using a BIOS fixed in the ROM or a bootloader in the embedded system, to boot the communication device 1000 into a normal running state. After the communication device 1000 enters the normal running state, the application program and the operating system in the RAM are run, to complete a processing process related to the communication device 1000 in the method embodiments.

It may be understood that FIG. 10 shows only a simplified design of the communication device 1000. In actual application, the communication device may include any quantity of communication interfaces, processors, or memories.

An embodiment of this application further provides a computer-readable medium. The computer-readable medium stores program code. When the computer program code is run on a computer, the computer is caused to perform the method performed by the network device. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

An embodiment of this application further provides a chip, used in a communication device. The chip includes at least one processor, at least one memory, and an interface circuit. The interface circuit is responsible for information exchange between the chip and the outside. The at least one memory, the interface circuit, and the at least one processor are connected to each other through a line. The at least one memory stores instructions, and the instructions are executed by the at least one processor, to perform an operation performed by the communication device 1000 in the methods according to the foregoing aspects. In a specific implementation process, the chip may be implemented in a form of a central processing unit (central processing unit, CPU), a microcontroller unit (microcontroller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a computer program product, used in a communication device. The computer program product includes a series of instructions. When the instructions are run, an operation of the communication device in the methods according to the foregoing aspects is performed.

An embodiment of this application further provides a data transmission system, including a sending device and a receiving device. The sending device includes modules configured to perform the foregoing method embodiments. The sending device may be the apparatus 800 or the communication device 1000 described above, and the receiving device may be the apparatus 900 or the communication device 1000 described above.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
transmitting, by a first communication device, a first data frame to a second communication device, wherein the first data frame comprises a first quantity of valid data blocks;
when a first rate is different from a second rate, adjusting, by the first communication device based on the first rate and the second rate, the quantity of valid data blocks in the transmitted data frame from the first quantity to a second quantity, to obtain a second data frame after adjustment, wherein a length of the first data frame is the same as a length of the second data frame, the first rate is a rate at which the first communication device transmits valid data in the data frame, and the second rate is a rate at which data is transmitted over a media access control MAC layer of the first communication device; and
transmitting, by the first communication device, the second data frame to the second communication device.

2. The method according to claim 1, wherein adjusting, by the first communication device based on the first rate and the second rate, the quantity of valid data blocks in the transmitted data frame from the first quantity to the second quantity comprises:
adjusting, by the first communication device based on a ratio between the first rate and the second rate, a total of bits in the valid data in the transmitted data frame from a third quantity to a fourth quantity, wherein a ratio between the third quantity and the fourth quantity is the same as the ratio between the first rate and the second rate, the third quantity is a total of bits in the first quantity of valid data blocks, and the fourth quantity is a total of bits in the second quantity of valid data blocks.

3. The method according to claim 2, wherein adjusting, by the first communication device based on the ratio between the first rate and the second rate, the quantity of bits in the valid data in the transmitted data frame from the third quantity to the fourth quantity comprises:
adjusting, by the first communication device based on the ratio between the first rate and the second rate, the quantity of valid data blocks in the transmitted data frame from the first quantity to the second quantity, wherein a ratio between the first quantity and the second quantity is the same as the ratio between the third quantity and the fourth quantity.

4. The method according to any one of claims 1 to 3, wherein adjusting, by the first communication device based on the first rate and the second rate, the quantity of valid data blocks in the transmitted data frame from the first quantity to the second quantity comprises:
adjusting, by the first communication device based on the first rate and the second rate, a preset quantity of padding bits when the data frames are encoded at a physical coding sublayer PCS, wherein the first data frame on which the first communication device performs PCS encoding comprises the first quantity of valid data blocks and a first preset quantity of padding bits, the second data frame on which the first communication device performs PCS encoding comprises the second quantity of valid data blocks and a second preset quantity of padding bits, and a total of the bits in the first quantity of valid data blocks and the first preset quantity of bits is the same as a total of the bits in the second quantity of valid data blocks and the second preset quantity of bits.

5. The method according to any one of claims 1 to 4, wherein a rate at which the first communication device transmits the valid data in the first data frame is a third rate, and the method further comprises:
adjusting, by the first communication device based on the third rate and the second rate, clock frequencies used for PCS encoding and scrambling on the valid data blocks by the first communication device.

6. The method according to claim 5, wherein when the first communication device transmits the first data frame, the clock frequencies used for PCS encoding and scrambling on the valid data blocks by the first communication device are n₁ and m₁ respectively; and
adjusting, by the first communication device based on the third rate and the second rate, the clock frequencies used for PCS encoding and scrambling on the valid data blocks by the first communication device comprises:
adjusting, by the first communication device based on a ratio between the third rate and the second rate, the clock frequencies used for PCS encoding and scrambling on the valid data blocks by the first communication device to n₂ and m₂ respectively, wherein a ratio between n₁ and n₂ is the same as the ratio between the third rate and the second rate, and a ratio between m₁ and m₂ is the same as the ratio between the third rate and the second rate.

7. The method according to any one of claims 1 to 6, wherein the rate at which the first communication device transmits the valid data in the first data frame is a third rate, and the method further comprises:
adjusting, by the first communication device based on the third rate and the first rate, a clock frequency used for PCS encoding on the data frame by the first communication device.

8. The method according to claim 7, wherein when the first communication device transmits the first data frame, the clock frequency used for encoding the first data frame is h₁; and
adjusting, by the first communication device based on the third rate and the first rate, the clock frequency used for PCS encoding on the data frame by the first communication device comprises:
adjusting, by the first communication device based on a ratio between the third rate and the first rate, the clock frequency used for PCS encoding on the data frame by the first communication device to h₂, wherein a ratio between h₁ and h₂ is the same as the ratio between the third rate and the first rate.

9. A data transmission method, comprising:
when a fourth rate is different from a fifth rate, adjusting, by a second communication device, a quantity of valid data blocks obtained by decoding a data frame from a first quantity to a second quantity, wherein the fourth rate is a rate at which the second communication device receives valid data in the data frame, the fifth rate is a rate at which data is received over a media access control MAC layer of the second communication device, and the first quantity is, when the fourth rate is the same as the fifth rate, a quantity of valid data blocks obtained by the second communication device by decoding a first data frame;
receiving, by the second communication device, a second data frame from a first communication device, wherein the second data frame comprises the second quantity of valid data blocks; and
decoding, by the second communication device, the second data frame to obtain the second quantity of valid data blocks.

10. The method according to claim 9, wherein adjusting, by the second communication device based on the fourth rate and the fifth rate, the quantity of valid data blocks obtained by decoding the data frame from the first quantity to the second quantity comprises:
adjusting, by the second communication device based on a ratio between the fourth rate and the fifth rate, a total of bits in the valid data obtained by decoding the data frame from a third quantity to a fourth quantity, wherein a ratio between the third quantity and the fourth quantity is the same as the ratio between the fourth rate and the fifth rate, the third quantity is a total of bits in the first quantity of valid data blocks, and the fourth quantity is a total of bits in the second quantity of valid data blocks.

11. The method according to claim 10, wherein adjusting, by the second communication device based on the ratio between the fourth rate and the fifth rate,, the total of the bits in the valid data obtained by decoding the data frame from the third quantity to the fourth quantity comprises:
adjusting, by the second communication device based on the ratio between the fourth rate and the fifth rate, the quantity of valid data blocks obtained by decoding the data frame from the first quantity to the second quantity, wherein a ratio between the first quantity and the second quantity is the same as the ratio between the third quantity and the fourth quantity.

12. The method according to any one of claims 9 to 11, wherein adjusting, by the second communication device based on the fourth rate and the fifth rate, the quantity of valid data blocks obtained by decoding the data frame from the first quantity to the second quantity comprises:
adjusting, by the second communication device based on the fourth rate and the fifth rate, a preset quantity of discarded bits when the data frames are decoded at a PCS, wherein the first data frame on which the second communication device performs PCS decoding comprises the first quantity of valid data blocks and a first preset quantity of to-be-discarded bits, the second data frame on which the second communication device performs PCS decoding comprises the second quantity of valid data blocks and a second preset quantity of to-be-discarded bits, and a total of the bits in the first quantity of valid data blocks and the first preset quantity of bits is the same as a total of the bits in the second quantity of valid data blocks and the second preset quantity of bits.

13. The method according to any one of claims 9 to 12, wherein a rate at which the second communication device receives the valid data in the first data frame is a sixth rate, and the method further comprises:
adjusting, by the second communication device based on the sixth rate and the fourth rate, a clock frequency used for PCS decoding on the data frame by the second communication device.

14. The method according to claim 13, wherein when the second communication device receives the first data frame, the clock frequency used for PCS decoding on the first data frame by the second communication device is h₃; and
adjusting, by the second communication device based on the sixth rate and the fourth rate, the clock frequency used for PCS decoding on the data frame by the second communication device comprises:
adjusting, by the second communication device based on a ratio between the sixth rate and the fourth rate, to h₄, the clock frequency used for PCS decoding on the data frame by the second communication device, wherein a ratio between h₃ and h₄ is the same as the ratio between the sixth rate and the fourth rate.

15. The method according to any one of claims 9 to 14, wherein the rate at which the second communication device receives the valid data in the first data frame is the sixth rate, and the method further comprises:
adjusting, by the second communication device based on the sixth rate and the fifth rate, clock frequencies used for PCS descrambling and decoding on the valid data blocks by the second communication device.

16. The method according to claim 15, wherein when the second communication device receives the first data frame, the clock frequencies used for descrambling and decoding on the valid data blocks in the first data frame are n₃ and m₃ respectively; and
adjusting, by the second communication device based on the sixth rate and the fifth rate, the clock frequencies used for PCS descrambling and decoding on the valid data blocks by the second communication device comprises:
adjusting, by the second communication device based on a ratio between the sixth rate and the fifth rate, the clock frequencies used for PCS descrambling and decoding on the valid data blocks by the second communication device to n₄ and m₄, wherein a ratio between n₃ and n₄ is the same as the ratio between the sixth rate and the fifth rate, and a ratio between m₃ and m₄ is the same as the ratio between the sixth rate and the fifth rate.

17. A data transmission apparatus, wherein the apparatus is used in a first communication device, and comprises:
a transmission module, configured to transmit a first data frame to a second communication device, wherein the first data frame comprises a first quantity of valid data blocks; and
an adjustment module, configured to: when a first rate is different from a second rate, adjust, based on the first rate and the second rate, the quantity of valid data blocks in the transmitted data frame from the first quantity to a second quantity, to obtain a second data frame after adjustment, wherein a length of the first data frame is the same as a length of the second data frame, the first rate is a rate at which the first communication device transmits valid data in the data frame, and the second rate is a rate at which data is transmitted over a media access control MAC layer of the first communication device, wherein
the transmission module is specifically configured to transmit the second data frame to the second communication device.

18. A data transmission apparatus, wherein the apparatus is used in a second communication device, and comprises:
an adjustment module, configured to: when a fourth rate is different from a fifth rate, adjust a quantity of valid data blocks obtained by decoding a data frame from a first quantity to a second quantity, wherein the fourth rate is a rate at which the second communication device receives valid data in the data frame, the fifth rate is a rate at which data is received over a media access control MAC layer of the second communication device, and the first quantity is, when the fourth rate is the same as the fifth rate, a quantity of valid data blocks obtained by the second communication device by decoding a first data frame;
a receiving module, configured to receive a second data frame from a first communication device, wherein the second data frame comprises the second quantity of valid data blocks; and
a decoding module, configured to decode the second data frame to obtain the second quantity of valid data blocks.

19. A first communication device, comprising a processor and a memory, wherein the memory is configured to store a program or code, and the processor is configured to invoke the program or the code from the memory and run the program or the code to perform the method according to any one of claims 1 to 8.

20. A second communication device, comprising a processor and a memory, wherein the memory is configured to store a program or code, and the processor is configured to invoke the program or the code from the memory and run the program or the code to perform the method according to any one of claims 9 to 16.

21. A data transmission system, comprising a sending device and a receiving device, wherein the sending device comprises a module configured to perform the method according to any one of claims 1 to 8, and the receiving device comprises a module configured to perform the method according to any one of claims 9 to 16.

22. A chip, configured to perform the method according to any one of claims 1 to 16.

23. A computer-readable medium, comprising computer program instructions, wherein when the computer program instructions are run on a compute device, the compute device is caused to perform the method according to any one of claims 1 to 16.
